# EUROPEAN PATENT APPLICATION

(11) **EP 4 506 680 A1**
(43) Date of publication of application: **12.02.2025**
(21) Application number: 23851516.7
(22) Date of filing: 10.07.2023
(51) Int. Cl.: G01N 21/31, G01N 21/78

(54) **METHOD FOR FITTING STANDARD CURVE TO ANALYZE ENZYME CONCENTRATIONS DURING ENZYME CATALYSIS**

(30) Priority: 29.06.2023 CN 202310781994
(71) Applicant: Xu, Zhancheng, Shijiazhuang, Hebei 050011 (CN)
(72) Inventor: Xu, Zhancheng, Shijiazhuang, Hebei 050011 (CN)
(74) Representative: Bayramoglu et al.
(86) International application number: PCT/CN2023/106463
(87) International publication number: WO 2024/032291

(57) **Abstract**

A method of fitting the standard curve to analyze the enzyme concentration by enzyme catalysis is provided, including the following steps: within the preset concentration range of the enzyme and the concentration range of its corresponding substrate, select a substrate at any concentration within the range to react with an enzyme at any concentration within the range, test the optical signal, and obtain the standard curve for analyzing the enzyme concentration by calculating with multiple reaction curves formed beforehand. By applying the method in this invention, the tedious steps of fitting the standard curve in enzyme-catalysis testing and analyzing by the prior art can be reduced, materials can be saved and the test efficiency can be improved without reducing the accuracy of the prior art.

## Description

### TECHNICAL FIELD

The present invention relates to the field of biochemistry photoanalysis, specifically to a method of fitting the standard curve to analyze the enzyme concentration by enzyme catalysis.

### BACKGROUND TECHNOLOGY

The enzyme concentration test is widely applied in the technologies of coupled enzyme assay, enzyme-linked immunosorbent assay and chemiluminescent enzyme immunoassay. The coupled enzyme assay technology refers to adding one or several tool enzymes to the reaction system and converting a certain product produced by the enzyme to be tested to a new product that can be directly measured. When the reaction rate of the added enzyme and the reaction rate of the enzyme to be tested achieve an equilibrium, the reaction rate of the indicator enzyme can be used to express the enzyme concentration to be tested. It is usually used in combination with colorimetry, that is, the standard curve is created by the coloring degree of the second product in the coupling reaction and the concentration of the enzyme to be tested to test the enzyme concentration.

In enzyme-linked immunosorbent assay (ELISA), the antibody is labeled with enzyme, and the known antigen or antibody is absorbed on the surface of the solid phase carrier, so that the antigen-antibody reaction is carried out on the surface of the solid phase carrier. The free components in the liquid phase are washed by washing method. Finally, color is developed after the enzyme acts on the substrate, and the standard curve is created according to the color developing degree and the concentration of the object to be tested to test the content of antigen or antibody in the sample.

Enzyme immunochemiluminescence technology is a combined application of enzyme-linked immunoassay and chemiluminescence technology. The antibody is labeled with enzyme, and, by reaction of the antigen-antibody on the solid phase carrier, the free components are washed away. After that, by the catalysis of the enzyme on the luminescent substrate, the substrate illumines directly. The object to be tested has a certain linear relationship with the luminous intensity and the content of antigen or antibody in the sample can be tested by creating a standard curve.

The content of the tested substance is analyzed by measuring the enzyme concentration in the above test technologies. The enzyme concentration is determined with the principle that the enzyme concentration is directly proportional to the reaction rate by the prior art, which usually needs to create the standard curves with 5 points or more. That is, use a substrate at suitable concentration to react with enzyme at multiple different concentrations, test the optical signals and fit the standard curve to analyze the tool enzyme concentration. Generally, the vertical coordinates are 3-6 optical signals obtained by testing and the horizontal coordinates are 3-6 concentrations of the corresponding tool enzyme. In the process of creating the standard curve, some bioactive substances are used which will change over time even in stable storage conditions. Therefore, in order to ensure the accuracy of the test, it is necessary to create the standard curve before each experiment, which involves tedious operation steps. The reagents of tool enzyme, color developing and illumining are expensive. A method is urgently needed to reduce the tedious operation of creating traditional standard curves before each experiment so as to save costs, reduce the consumption of tool enzyme reagents, color developing and illumining reagents, and improve test efficiency.

### CONTENT OF THE INVENTION

This invention provides a method of fitting the standard curve to analyze the enzyme concentration by enzyme catalysis. By applying this method, on the premise of ensuring the accuracy of the test, the standard curve for analyzing the enzyme concentration can be obtained by calculating with multiple reaction curves formed beforehand after reacting and testing only once. The consumption of the tool enzymes and the coloring and illumining reagents is saved, the tedious operation of starting the analytical equipment for each test or creating a standard curve before each experiment is reduced, and the mechanical structure of automatic test equipment is simplified.

### TECHNICAL PROPOSAL

A method of fitting the standard curve to analyze the enzyme concentration by enzyme catalysis is characterized by the following steps: step 1, set a range of concentrations for analyzing the enzyme; step 2, test the optical signals by enzyme catalysis, and determine a range of the suitable substrate concentrations for testing the enzyme in the concentration range of step 1; step 3, by the enzyme catalysis process of step 2, select substrate at multiple different concentrations within the set range of the substrate concentrations in step 2 to react with enzyme at multiple different concentrations within the enzyme concentration range, and fit at least three or more reaction curves and generate curve equations; step 4, use the reaction curve fitted in step 3 to test substrate at any concentration within the range of the substrate concentrations in step 2 to obtain an optical signal; step 5, substitute the optical signal obtained in step 4 into the reaction curve equation of the corresponding enzyme concentration in step 3 to obtain a substrate concentration value; step 6, substitute the substrate concentration value into the other reaction curve equations in step 3, three or more optical signals are obtained by calculation; step 7, take three or more optical signals obtained in step 6 as the vertical coordinates and the corresponding enzyme concentrations as the horizontal coordinates, create a curve and a curve equation, and obtain the standard curve of testing the enzyme concentration by substrate at any concentration within the range of the substrate concentrations in step 2.

The said optical signals refer to the visible light and the invisible light, which are specifically manifested as absorbance, reflection intensity, fluorescence intensity and chemiluminescence intensity.

The said enzyme catalysis is carried out under the same reaction system, which refers to setting the range of concentrations for analyzing the enzyme and the range of the suitable substrate concentrations for testing and analyzing. The other conditions in the reaction system remain the same.

The said reaction curves fitted and curve equations generated in the step 3 are the ones of testing the substrate concentration by the prior art, that is, the vertical coordinates are 3-5 or more optical signals and the horizontal coordinates are 3-5 or more corresponding substrate concentrations.

Based on the principle that the enzyme concentration is directly proportional to the reaction rate when the substrate concentration is certain, the reaction system can be presented as follows.

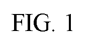

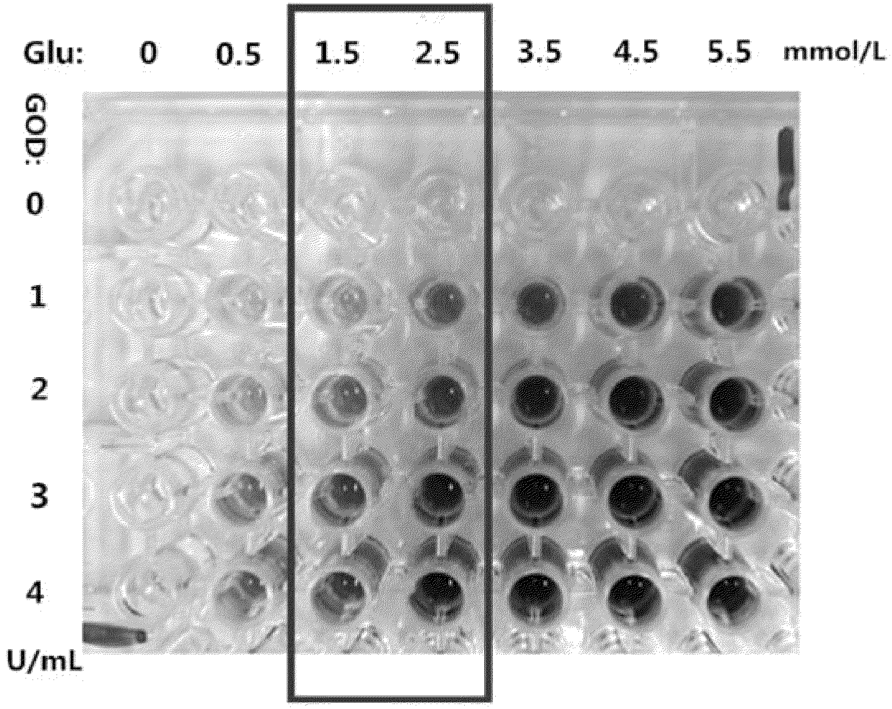

It can be observed that when the substrates at different concentrations are used, such as 1.5 mmol/L to 2.5 mmol/L, color developing in the upper and lower of the enzyme concentration range can be achieved, and each reaction color can be found with its corresponding substrate concentration and enzyme concentration.

Select substrate at multiple different concentrations within the set range of the substrate concentrations and use it to react with enzyme at multiple different concentrations within the enzyme concentration range, and form beforehand three or more reaction curves and curve equations for analyzing the substrate by the prior art. A substrate at any concentration in the range of 1.5 mmol/L to 2.5 mmol/L is used to react with enzyme at any concentration in the range. The substrate concentration value can be calculated by the corresponding curve for analyzing the substrate concentration. This substrate concentration value is substituted into the multiple reaction curve equations formed beforehand for analyzing the substrate concentration, and the optical signal values of the substrate at this concentration reacting with enzyme at multiple concentrations are obtained by calculation. The standard curve for analyzing the enzyme concentration can be obtained by calculating with the obtained multiple optical signal values and the corresponding enzyme concentrations.

The method in this invention only needs to react and test once and the standard curve for analyzing the enzyme concentration can be obtained by calculation, which can save materials, reduce operation steps and is more efficient and faster than the method of creating the standard curve before the experiment by the prior art.

The immunodiagnosis market in China reaches about 38 billion yuan, where enzyme chemiluminescence and ELISA reagent account for 67%. Used to analyze the content of the tested substance by testing the enzyme concentration, these two test methods, where the method of fitting the standard curve in this invention can be applied, involves a technical market of more than 20 billion yuan.

### SPECIFIC IMPLEMENTATIONS

The following embodiments are intended to deepen the understanding to this invention and do not represent the entire content of this invention which includes but is not limited to the following embodiments.

### Embodiment 1

Glucose oxidase is determined by Trinder reaction. Glucose is catalyzed by glucose oxidase to produce hydrogen peroxide, and then chromogenic reaction of the hydrogen peroxide with the chromogenic agent under the action of peroxidase occurs. The concentration of glucose oxidase is analyzed by testing the absorbance and fitting the standard curve, and the range of concentrations for analyzing the enzyme is set to be 2 U/mL - 5 U/mL. The suitable range of the substrate concentrations for testing obtained from the experiment is 2 mmol/L - 6 mmol/L. Three or more reaction curves for testing the substrate concentration by the prior art are formed beforehand.

The first curve, the curve of the enzyme at concentration near the median of the range reacting with the substrate at multiple concentrations within the suitable range.

The second curve, the curve of the enzyme at concentration in the upper limit of the range reacting with the substrate at multiple concentrations within the suitable range.

The third curve, the curve of the enzyme at concentration in the lower limit of the range reacting with the substrate at multiple concentrations within the suitable range.

X axis represents the glucose concentration, Y axis represents the absorbance obtained, and the reaction time is 15 mins.

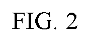

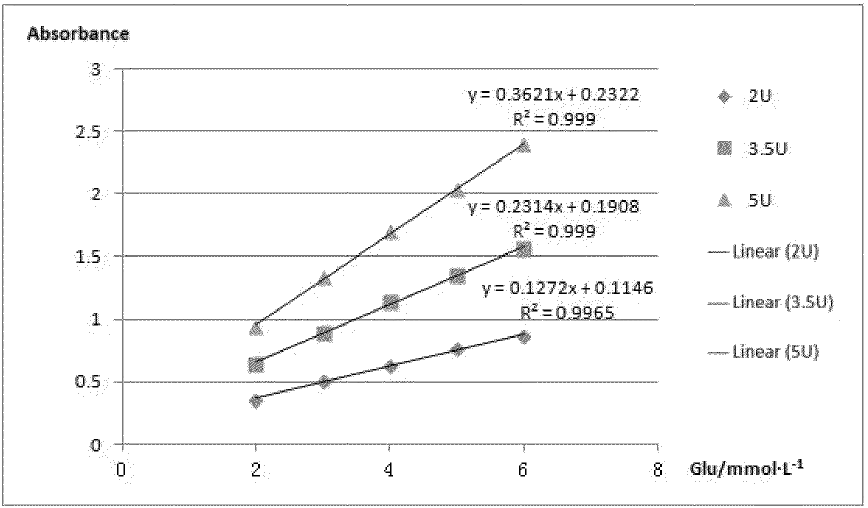

The upper curve is a curve of the glucose oxidase (5 U/mL) in the upper limit of the range reacting with glucose at five different concentrations (2 mmol/L, 3 mmol/L, 4 mmol/L, 5 mmol/L, 6 mmol/L).

The middle curve is a curve of the glucose oxidase (3.5 U/mL) near the median of the range reacting with glucose at five different concentrations (2 mmol/L, 3 mmol/L, 4 mmol/L, 5 mmol/L, 6 mmol/L).

The lower curve is a curve of glucose oxidase (2 U/mL) in the lower limit of the range reacting with glucose at five different concentrations (2 mmol/L, 3 mmol/L, 4 mmol/L, 5 mmol/L, 6 mmol/L).

By using the glucose at any concentration (unknown) in the range to react with 3.5 U/mL glucose oxidase, the absorbance value obtained from the reaction is substituted into the reaction curve equation of 3.5 U/mL glucose oxidase and the glucose concentration value is obtained. The glucose concentration value is then substituted into the reaction curve equation of 2 U/mL glucose oxidase and the reaction absorbance of 2 U/mL glucose oxidase is obtained. The glucose concentration value is substituted into the reaction curve equation of 5 U/mL glucose oxidase and the reaction absorbance of 5 U/mL glucose oxidase is obtained. The reaction absorbance values of 2 U/mL glucose oxidase, 3.5 U/mL glucose oxidase and 5 U/mL glucose oxidase are taken as the vertical coordinates Y, and the corresponding enzyme concentrations (2 U/mL, 3.5 U/mL, 5 U/mL) are taken as the horizontal coordinates X. The linear equation is created to obtain the standard curve for analyzing the enzyme concentration.

By testing 3.5 U/mL glucose oxidase, the absorbance Y is 1.1739. It is known that the curve equation of 3.5 U/mL glucose oxidase is y=0.2314x+0.1908, and the glucose concentration x is calculated to be 4.25 mmol/L;

Substitute x= 4.25 into the upper and lower limit curve equations:
when the enzyme concentration is 2 U/mL, the absorbance is y = 0.1272×4.25+0.1146, that is, 0.6550;
when the enzyme concentration is 5 U/mL, the absorbance is y = 0.3621 × 4.25+0.2322, that is, 1.7706.

The standard curve for testing the enzyme concentration is fitted when the glucose concentration is 4.25 mmol/L: the horizontal coordinates are enzyme concentrations: 2, 3.5, 5 and the vertical coordinates are absorbance values: 0.6550, 1.1739, 1.7706.

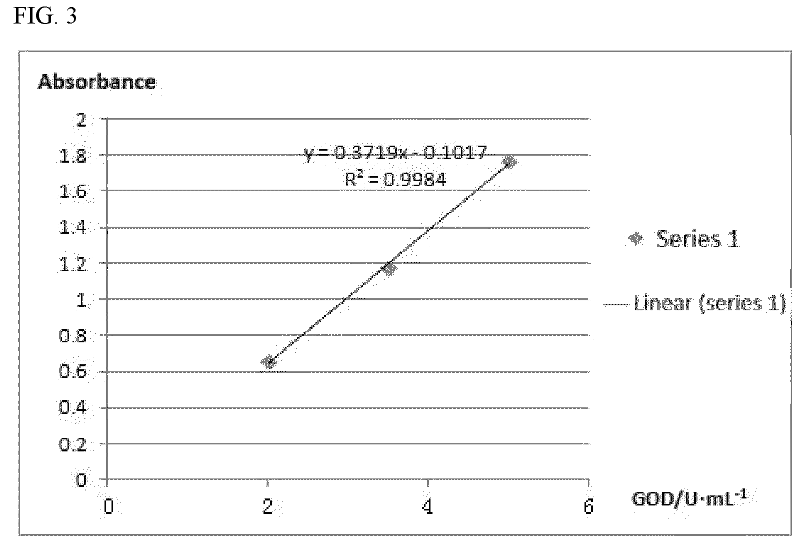

### Comparison with the Prior Art

The glucose oxidase (2 U/mL, 3.4 U/mL and 5 U/mL) at same three concentrations are tested by the standard curve that uses 4.25 mmol/L glucose to test the enzyme concentration (2 U/mL, 3 U/mL, 3.5 U/mL, 4 U/mL and 5 U/mL) created by the prior art and the standard curve fitted by this invention. The relative deviation between the two test results is calculated.

The standard curve of testing the enzyme concentration by the prior art is shown in the follow figure:

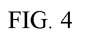

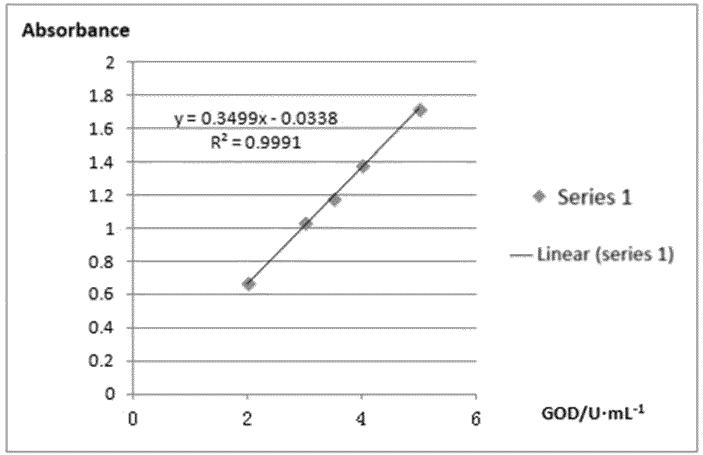

The glucose oxidase at same three concentrations are tested by the standard curve fitted by the prior art and the standard curve fitted by this invention. The deviations are all less than 5%.

FIG. 5

| | | | | | | |
|---|---|---|---|---|---|---|
| Actual concentration (U/ mL) | 2 | | 3.4 | | 5 | |
| Absorbance | 0.6761 | 0.6779 | 1.1652 | 1.1664 | 1.7351 | 1.7329 |
| The standard curve of the prior art (U/ mL) | 2.0289 | 2.0340 | 3.4267 | 3.4301 | 5.0554 | 5.0492 |
| The standard curve of the present invention (U/ mL) | 2.0914 | 2.0963 | 3.4066 | 3.4098 | 4.9390 | 4.9330 |
| Relative Deviation (%) | 1.52 | 1.51 | 0.29 | 0.30 | 1.17 | 1.16 |

### Embodiment 2

Enzyme-linked immunoassay (double antibody sandwich) is used to determine the concentration of galactose-1-phosphate uridylyltransferase (GALT). Samples and HRP labeled antibody are added into the micropores pre-coated with galactose-1-phosphate uridylyltransferase antibody, and after incubation and thorough washing, the substrate TMB is used for color developing. TMB and hydrogen peroxide (H₂O₂) are catalyzed by peroxidase to turn to blue, and eventually yellow under the action of acid. The absorbance is measured and the standard curve is fitted to analyze the concentration of galactose-1-phosphate uridylyltransferase. The analytical range is set to be 25 U /L - 100 U /L and the corresponding hydrogen peroxide range is 20%-40% (w%).

With absorbance as the vertical coordinate and hydrogen peroxide concentration as the horizontal coordinate, three curves of 25 U/L, 50 U/L and 100 U/L galactose-1-phosphate uridylyltransferase reacting separately with 20%, 25%, 30%, 35% and 40% hydrogen peroxide are created.

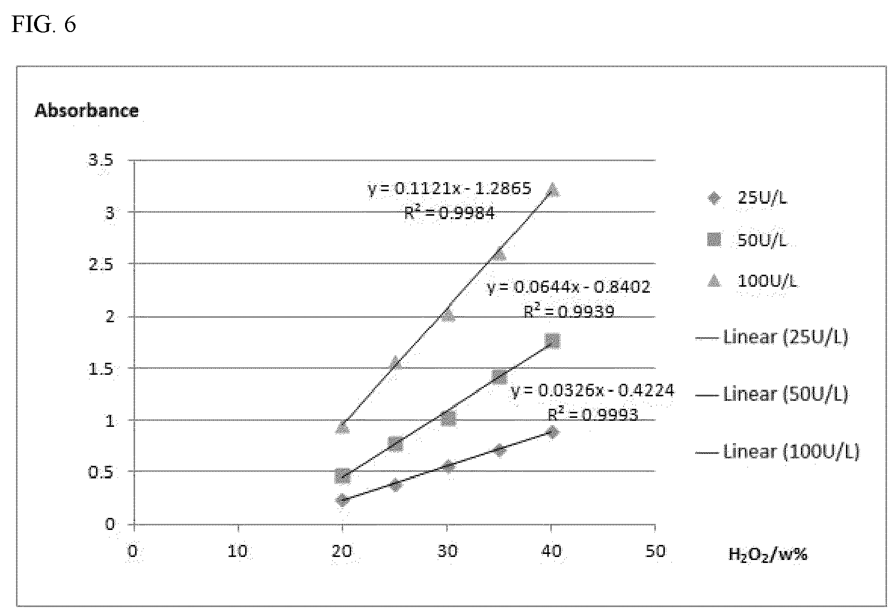

Hydrogen peroxide at any concentration in the range of 20% to 40% is used to react with 50 U/L galactose-1-phosphate uridylyltransferase and substitute the reaction result into the reaction curve of 50 U/L galactose-1-phosphate uridylyltransferase. The hydrogen peroxide concentration value at this point can be calculated. Simultaneously, this value is substituted into the reaction curves of 25 U/L and 100 U/L galactose-1-phosphate uridylyltransferase, and then the absorbance of 25 U/L, 50 U/L and 100 U/L galactose-1-phosphate uridylyltransferase at this concentration of hydrogen peroxide can be obtained. With these three absorbance values as the vertical coordinates and the corresponding concentrations of galactose-1-phosphate uridylyltransferase as the horizontal coordinates, the standard curve for analyzing the concentration of galactose-1-phosphate uridylyltransferase can be fitted.

The absorbance of 50 U/L galactose-1-phosphate uridylyltransferase is tested to be 1.0935, and x=30 is calculated by the reaction equation of 50 U/L galactose-1-phosphate uridylyltransferase y=0.0644x-0.8402, that is, the concentration of hydrogen peroxide is 30%.

Substitute x=30 into the reaction equations of 25 U/L and 100 U/L galactose-1-phosphate uridylyltransferase separately.

When GALT concentration is 25 U/L, y = 0.0326 × 30-0.4224, that is, absorbance is 0.5565.

When GALT concentration is 100 U/L, y = 0.1121 × 30-0.8402, that is, the absorbance is 2.0794.

The analysis curve when the concentration of hydrogen peroxide is 30% is fitted: the horizontal coordinates are 25, 50 ,100 and the vertical coordinates are 0.5565, 1.0935, 2.079.

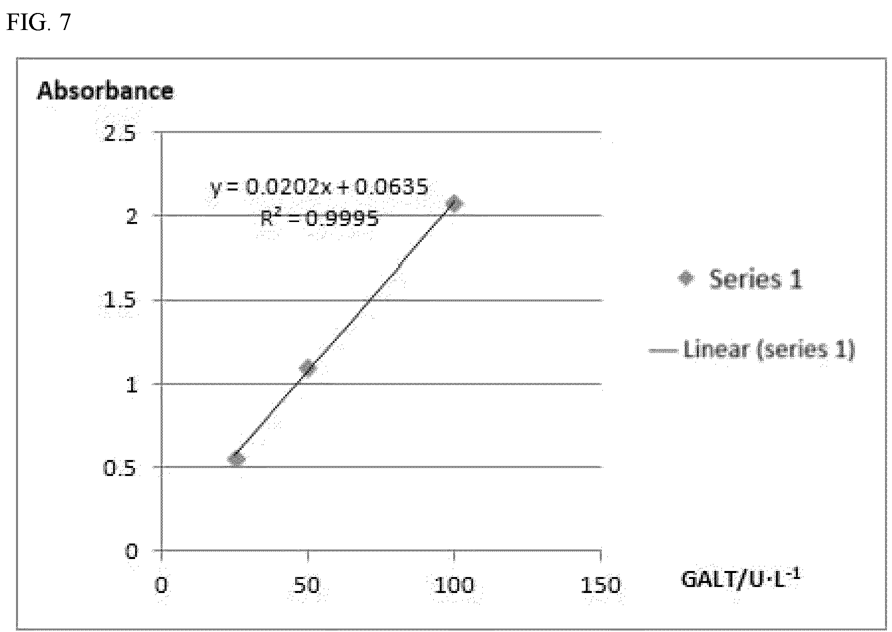

### Embodiment 3

The concentration of human chorionic gonadotropin (HCG) is determined by enzyme immunochemiluminescence method. Samples and HRP labeled antibodies are added into the micropores pre-coated with HCG antibodies. After incubation and thorough washing, luminol reagent (containing hydrogen peroxide) is added for illumining, the luminous intensity is tested and the standard curve is fitted to analyze the concentration of HCG. The range of concentrations for analyzing HCG is set to be 5 mg/L - 20 mg/L, and the range of the corresponding hydrogen peroxide concentrations is 15% - 55% (w%).

Three curves of 5 mg/L, 10 mg/L and 20 mg/L HCG reacting separately with 15%, 25%, 35%, 45% and 55% hydrogen peroxide are created.

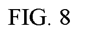

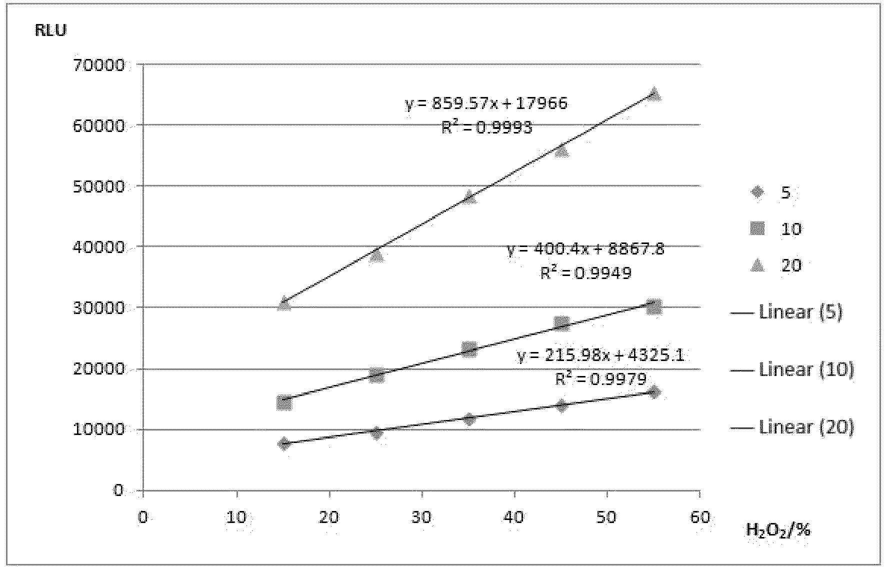

Hydrogen peroxide at any concentration in the range of 15% - 55% is used to react with 10 mg/L HCG, substitute the reaction result into the reaction equation of 10 mg/L HCG, and the concentration of hydrogen peroxide can be calculated. Then the value of the hydrogen peroxide concentration is substituted into the reaction equations of 5 mg/L and 20 mg/L separately and the luminous intensity of 5 mg/L, 10 mg/L and 20 mg/L HCG at this concentration of hydrogen peroxide can be obtained. Taking these three luminous intensity values as the vertical coordinates and the corresponding HCG concentrations as the horizontal coordinates, the standard curve for analyzing HCG concentration is created.

The luminous intensity of 10 mg/L HCG is tested to be 20956, substitute this value to the reaction equation of 10 mg/L HCG y=400.4x+ 8867.8, and x=30 is calculated, that is, the concentration of hydrogen peroxide is 30%.

Substitute x=30 into the reaction equations of 5 mg/L and 20 mg/L separately:
when the HCG concentration is 5 mg/L, y = 215.98 × 30+4325.1, that is, the luminous intensity is 10805;
when the HCG concentration is 20 mg/L, y = 859.57 × 30+17966, that is, the luminous intensity is 43858.

The standard curve for analyzing HCG when the concentration of the hydrogen peroxide is 30% is fitted: the horizontal coordinates are 5, 10, 20 and the vertical coordinates are 10805, 20956, 43858.

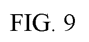

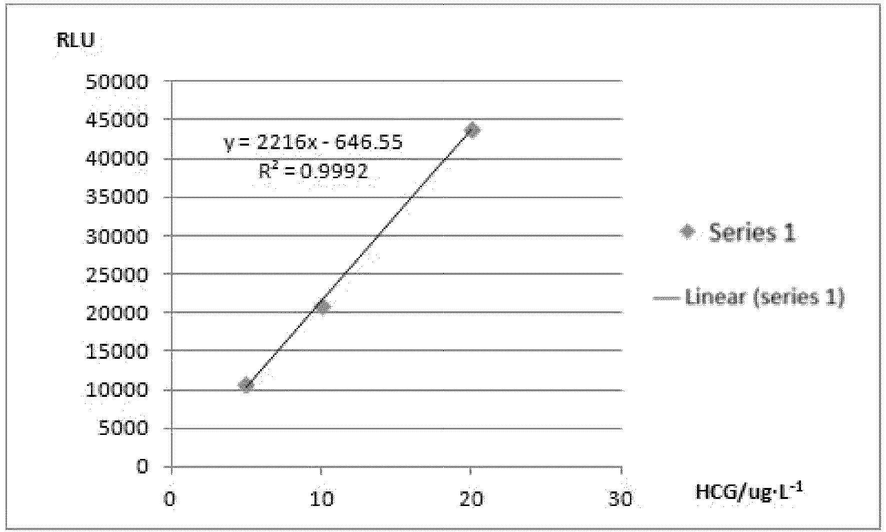

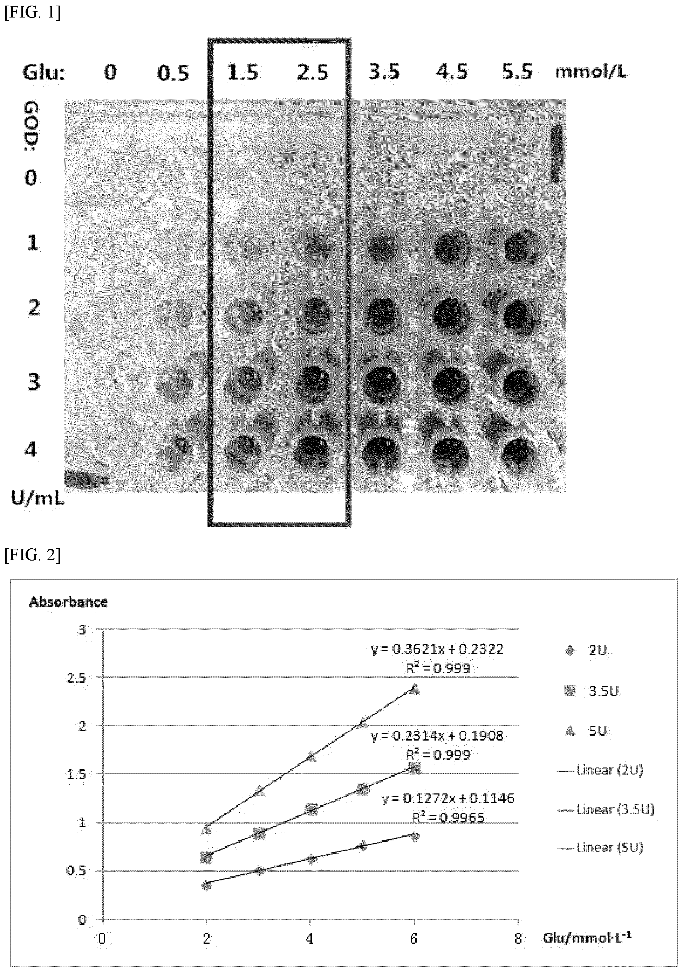

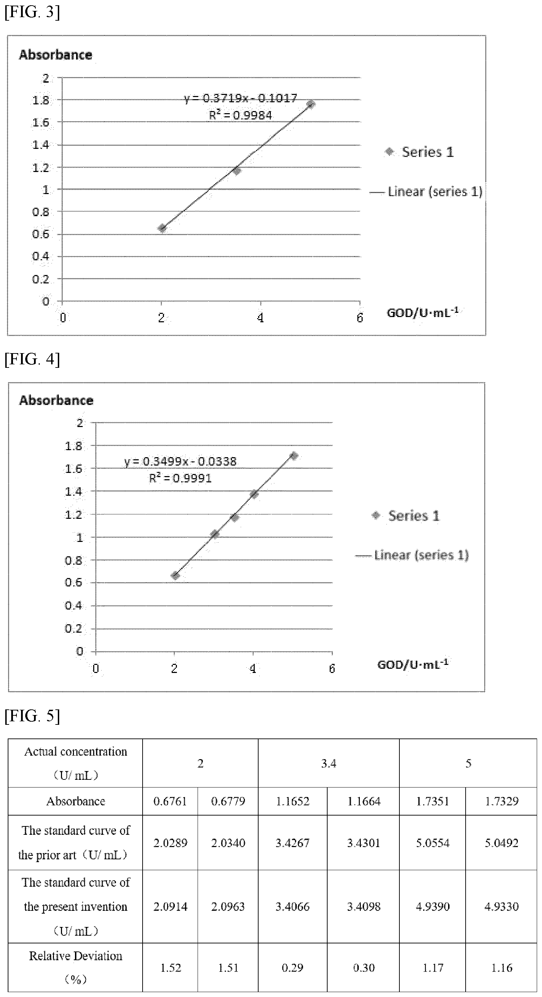

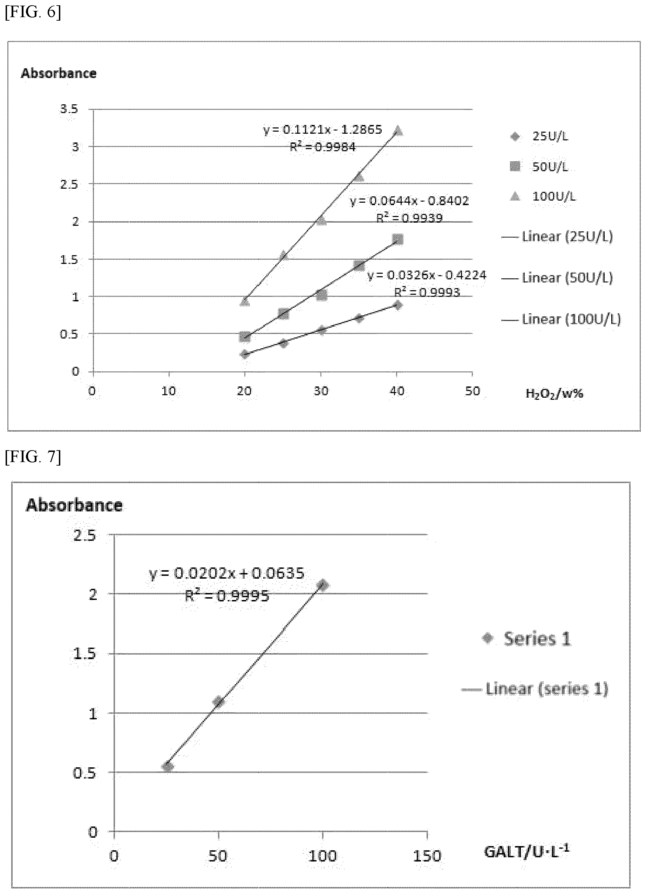

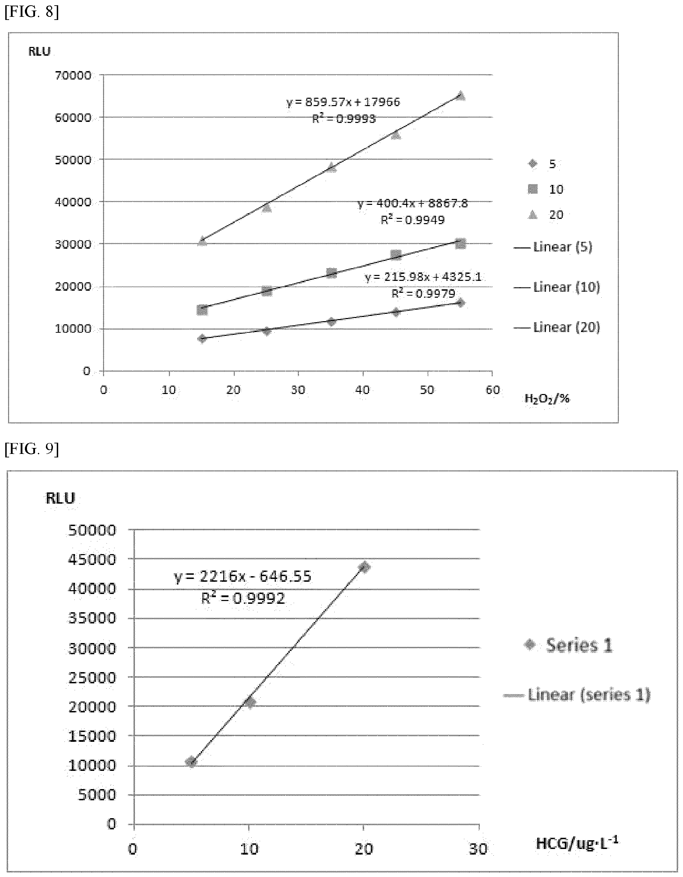

## Claims

1. A method of fitting the standard curve to analyze the enzyme concentration by enzyme catalysis, wherein its characteristics feature the following steps: step 1, setting a range of concentrations for analyzing the enzyme; step 2, testing optical signals by enzyme catalysis and determining a range of suitable substrate concentrations for testing an enzyme in the concentration range of step 1; step 3, by the enzyme catalysis process of step 2, selecting substrate at multiple different concentrations within the range of the suitable substrate concentrations set in step 2 to react with enzyme at multiple different concentrations within the range of the enzyme concentrations, and fitting at least three or more reaction curves and generating curve equations; step 4, using the reaction curves fitted in step 3 to test substrate at any concentration within the range of the suitable substrate concentrations in step 2 to obtain an optical signal; step 5, substituting the optical signal obtained in step 4 into the curve equation of the corresponding enzyme concentration in step 3 to obtain a substrate concentration value; step 6, substituting the substrate concentration value into the other curve equations in step 3 and obtaining three or more optical signals by calculation; step 7, taking three or more optical signals obtained in step 6 as vertical coordinates and corresponding enzyme concentrations as horizontal coordinates, creating a curve and a curve equation, and obtaining the standard curve for testing the enzyme concentration by substrate at any concentration within the range of the suitable substrate concentrations in step 2.

2. The method according to claim 1 of fitting the standard curve to analyze the enzyme concentration by enzyme catalysis, wherein the optical signals refer to the visible light and the invisible light.

3. The method according to claim 1 of fitting the standard curve to analyze the enzyme concentration by enzyme catalysis, wherein the enzyme catalysis is carried out in the same reaction system.

4. The method according to claim 1 of fitting the standard curve to analyze the enzyme concentration by enzyme catalysis, wherein for the reaction curves fitted and the curve equations generated in step 3, the vertical coordinates are 3 - 5 or more optical signals obtained by the test and the horizontal coordinates are 3 - 5 or more corresponding substrate concentrations.

5. The optical signals according to claim 2 refer to the visible light and the invisible light, wherein the visible light and the invisible light manifest as absorbance, reflection intensity, fluorescence intensity and chemiluminescence intensity.

6. The enzyme catalysis according to claim 3 is carried out under the same reaction system, wherein the same reaction system refers to setting the range of concentrations for analyzing the enzyme and the range of the suitable substrate concentrations, and other conditions in the reaction system remaining the same.

7. The curves and curve equations according to step 3 and step 7 of claim 1, wherein the curve is a directly proportional curve or an inversely proportional curve, and a curve having a determination coefficient R<sup>2</sup> close to 1 is selected.
